# EUROPEAN PATENT APPLICATION

(11) **EP 4 788 025 A1**
(43) Date of publication of application: **05.08.2026**
(21) Application number: 24872915.4
(22) Date of filing: 25.09.2024
(51) Int. Cl.: H04W 72/27, H04W 72/0446, H04W 72/0453, H04L 5/14, H04J 11/00, H04W 92/20

(54) **METHOD FOR PERFORMING COMMUNICATION AND DEVICE THEREFOR IN WIRELESS COMMUNICATION SYSTEM**

(30) Priority: 27.09.2023 US 202363540660 P
(71) Applicant: LG Electronics Inc., Yeongdeungpo-gu Seoul 07336 (KR)
(72) Inventor: SONG, Minwoo, Seoul 06772 (KR); KO, Hyunsoo, Seoul 06772 (KR); YOU, Hyangsun, Seoul 06772 (KR); SHIM, Jaenam, Seoul 06772 (KR)
(74) Representative: Jung, Minkyu
(86) International application number: PCT/KR2024/014502
(87) International publication number: WO 2025/071207

(57) **Abstract**

According to various embodiments, disclosed are a method by which a first base station performs communication and a device therefor in a wireless communication system. Disclosed are a method and a device therefor, the method comprising the steps of: transmitting, to a second base station, first intended TDD DL-UL configuration information related to a first base station; and receiving, from the second base station, second intended TDD DL-UL configuration information related to the second base station.

## Description

### TECHNICAL FIELD

The present disclosure relates to a method by which a base station (BS) performs sub-band full duplex (SBFD) operation in a wireless communication system, and an apparatus for the method.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### Technical Problem

An object of the present disclosure is to provide a method by which a base station (BS) performs operations related to sub-band full duplex (SBFD) more accurately and efficiently in a wireless communication system.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

In an aspect of the present disclosure, provided herein is a method of performing communication by a first base station (BS) in a wireless communication system. The method includes: transmitting first intended time division duplexing (TDD) downlink-uplink (DL-UL) configuration information related to the first BS to a second BS; and receiving second intended TDD DL-UL configuration information related to the second BS from the second BS. The second intended TDD DL-UL configuration information includes full duplex (FD) slot configuration information for slots in which sub-band full duplex (SBFD) operation or spectrum sharing full duplex (SSFD) operation is performed.

Alternatively, the FD slot configuration information may include information indicating whether all symbols included in a corresponding slot are configured as UL symbols, DL symbols, or FD symbols, for each slot index.

Alternatively, the FD slot configuration information may further include information on a specific slot for which a symbol configuration is defined, and the symbol configuration may include a number of DL symbols and a number of FD symbols, or a number of UL symbols and the number of FD symbols.

Alternatively, the first BS may perform operations related to mitigation of cross link interference (CLI) based on the FD slot configuration information.

Alternatively, the second intended TDD DL-UL configuration information may further include frequency resource information related to a start frequency and a bandwidth for specifying a frequency band in which FD operation is performed.

Alternatively, the frequency resource information may further include configuration information for a resource block set related to the frequency band.

Alternatively, the second intended TDD DL-UL configuration information may further include configuration information for protected half duplex (HD) slots in which only HD operation is performed.

Alternatively, the first BS may identify time intervals for which performance of operations related to mitigation of CLI is unnecessary, based on the configuration information for the protected HD slots.

Alternatively, slots in which the SBFD operation is performed may be time intervals in which transmission of a DL signal in a first sub-band and reception of a UL signal in a second sub-band are simultaneously performed.

Alternatively, the first intended TDD DL-UL configuration information and the second intended TDD DL-UL configuration information may be received through an Xn interface or an F1 interface.

In another aspect of the present disclosure, provided herein is a non-transitory computer-readable storage medium having recorded thereon instructions for performing the above-described method for a first BS to perform communication.

In another aspect of the present disclosure, provided herein is a first BS configured to perform the above-described method for performing communication.

In another aspect of the present disclosure, provided herein is a processing device configured to control a first BS that performs the above-described communication.

In another aspect of the present disclosure, provided herein is a method of performing communication by a second BS in a wireless communication system. The method includes: receiving first intended TDD DL-UL configuration information related to a first BS; and transmitting second intended TDD DL-UL configuration information related to a second BS to the first BS. Based on the second BS supporting SBFD operation or SSFD operation, the second intended TDD DL-UL configuration information includes FD slot configuration information for slots in which the SBFD operation or the SSFD operation is performed.

In a further aspect of the present disclosure, provided herein is a second BS configured to perform the above-described method for performing communication.

### Advantageous Effects

According to various embodiments, a base station (BS) may perform operations related to sub-band full duplex (SBFD) more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 illustrates a process in which a UE transmits ACK/NACK via PUSCH.
FIG. 7 illustrates an example of a CSI-related procedure.
FIG. 8 is a diagram for explaining a method of performing a full duplex operation in an NR system.
FIG. 9 and FIG. 10 are diagrams for explaining sub-band full duplex (SBFD) and single frequency full duplex (SFFD) operations.
FIG. 11 is a diagram for explaining a method in which a first base station (BS) performs operations related to mitigation of cross link interference (CLI) based on intended time division duplexing (TDD) downlink-uplink (DL-UL) configuration information received from a second BS.
FIG. 12 is a diagram for explaining a method in which a second BS exchanges intended TDD DL-UL configuration information with a first BS.
FIG. 13 illustrates an exemplary flexible network topology to which some examples of the present disclosure are applicable.
FIG. 14 illustrates a communication system applied to the present disclosure;
FIG. 15 illustrates wireless devices applicable to the present disclosure.
FIG. 16 illustrates another example of a wireless device to which the present disclosure is applied.

### DETAILED DESCRIPTION

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

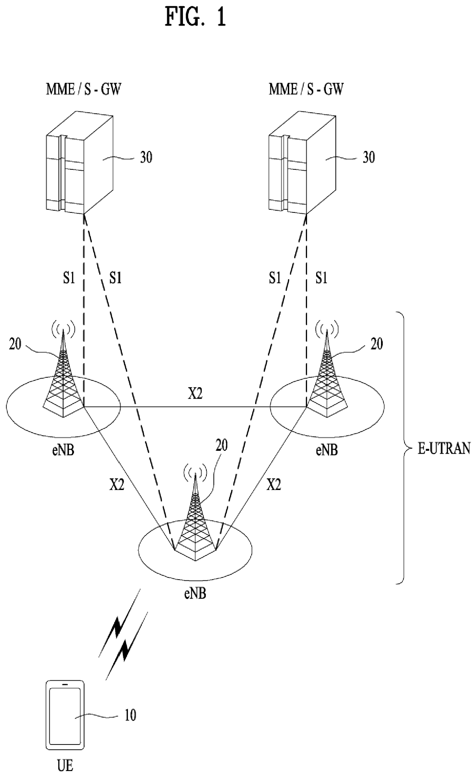

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

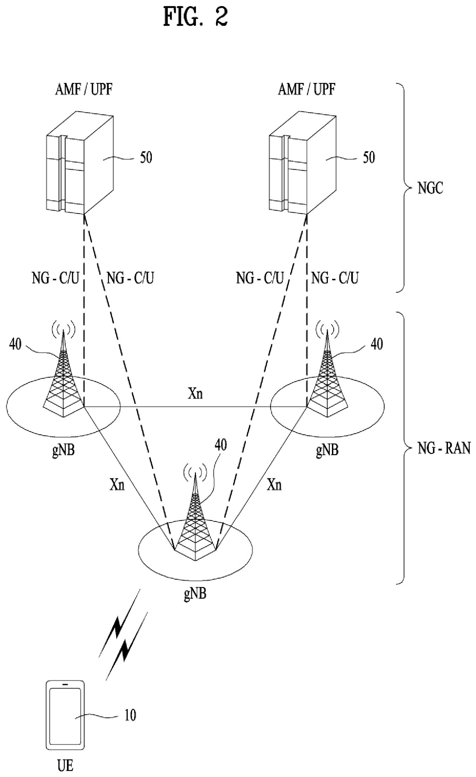

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

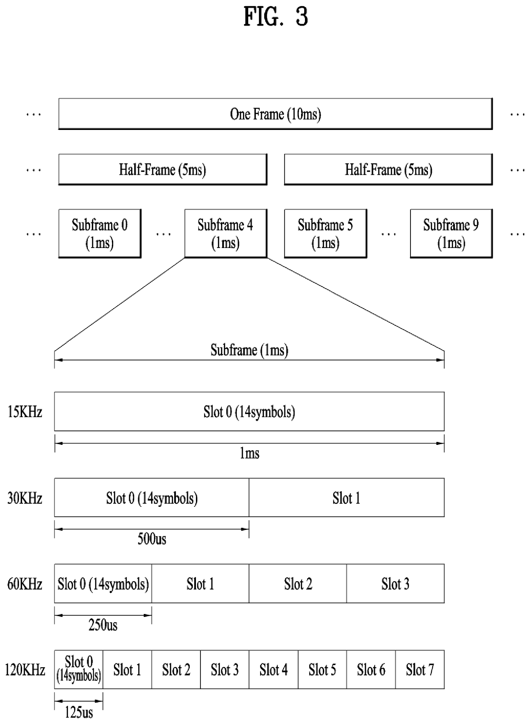

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

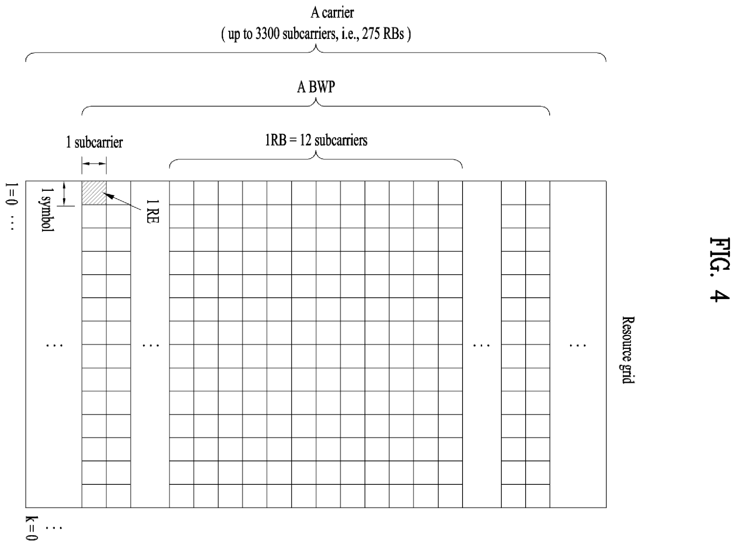

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, MMTC, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

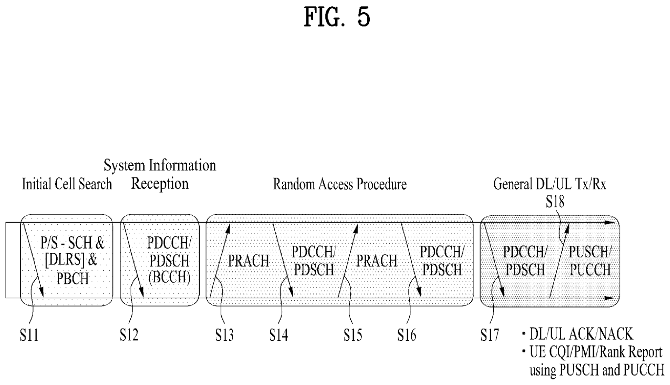

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

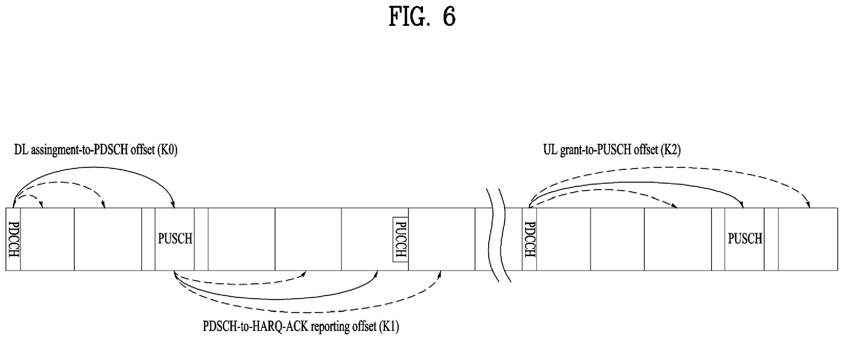

FIG. 6 illustrates an exemplary ACK/NACK transmission process

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.
the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

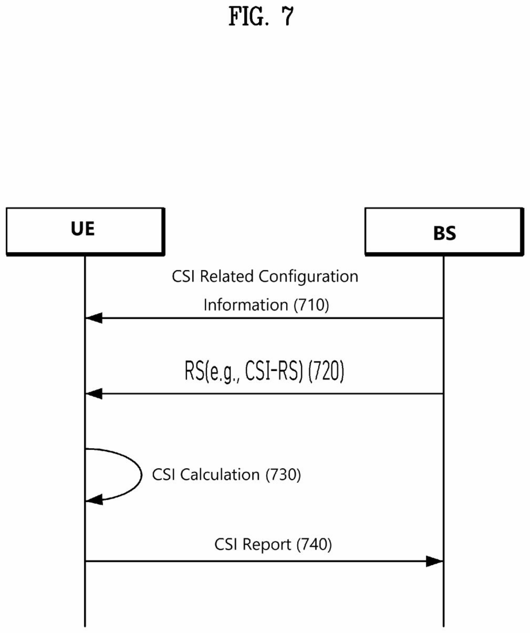

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time duration.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

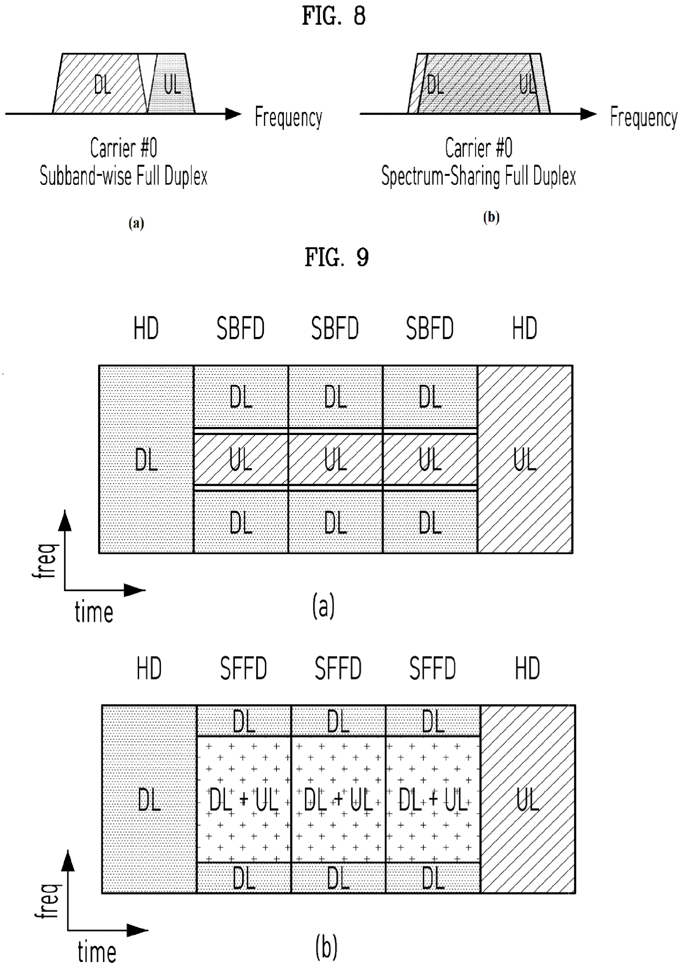

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a sub-band-wise full duplex (SB-FD) scheme illustrated in (a) of FIG. 8 and a spectrum sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Specifically, referring to FIG. 9, time resources may include time resources operating in half duplex (HD) and time resources operating in full duplex (FD) such as SB-FD or SS-FD. As illustrated in FIG. 9(a), the time resources may include some time resources for SB-FD operation and remaining time resources for HD operation. Alternatively, the time resources may include, as illustrated in FIG. 9(b), time resources for SS-FD operation and remaining time resources for HD operation. In this case, a unit of time resources (for operation in SS-FD, for operation in SB-FD, or for operation in HD) may be a slot unit or a symbol unit. In time resources operating in SB-FD, some frequency resources may be used as DL resources, and some frequency resources may be used as UL resources.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

### Background of FDR

Introduction of FDR has been discussed in certain scenarios (e.g. 3GPP RAN plenary). There are two types of FDRs discussed in the above scenarios. First, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In the operation of such FDR, gNB can consider dividing and setting the time durations of HD (half duplex) and FD (full duplex). This can be largely divided into SBFD (sub-band full duplex) and SFFD (single frequency full duplex), and the slot configuration and cell resource pattern for this can be considered to operate based on the following example.

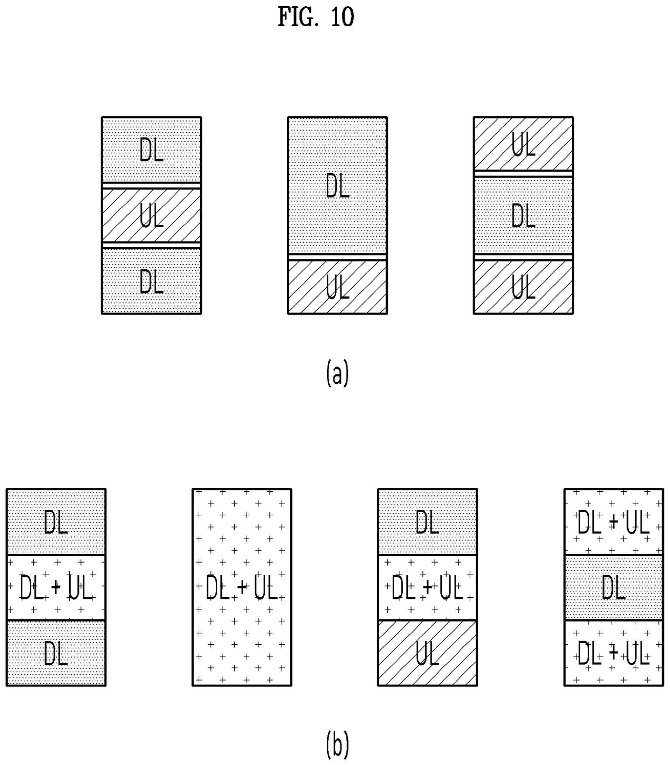

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in FIG. 9 (b) and FIG. 10 (b). Specifically, referring to FIG. 10 (b), the sub-band region of DL and the sub-band region of UL may overlap each other. Alternatively, referring to FIG. 9 (b), the SFFD operation may be performed based on a resource pattern of a cell or a base station. For example, in the resource pattern, an HD (half-duplex) slot/symbol and an SBFD slot/symbol may be TDMed with each other.

### Inter-Cell FD Time/Frequency Configuration Information Exchange

A second BS may operate based on SBFD (or FD), and a first BS of an adjacent cell may operate based on SBFD (or FD) or TDD. In this case, the first BS needs to identify a time/frequency band in which interference (for example, cross link interference (CLI)) caused by SBFD operation of the second BS is expected to occur, and needs to perform an operation of handling CLI for the identified time/frequency band. For this purpose, the first BS needs to receive an SBFD configuration for DL/UL time/frequency bands from the second BS.

As described above, SBFD operation and SSFD operation, which are types of FD, may be supported. The SBFD operation may be an operation of receiving a UL signal in a sub-band (or some frequency resources) within some DL slots/symbols in an existing dynamic TDD system. Here, since the sub-band is used for another link direction, DL and UL may simultaneously exist through different frequency resources within the same slot/symbol. The SSFD operation, unlike the SBFD operation, may be an operation in which DL and UL are transmitted and received through the same frequency resources overlapped within the same slot/symbol. Hereinafter, for convenience of description, the SSFD operation and the SBFD operation are briefly defined as FD operation .

When FD operation is performed, since UL and DL transmission and reception operations are performed together within the same slot/symbol, interference may occur between inter/intra cells (inter/intra Cell), between sub-bands, and/or between operators. Such interference may be defined as CLI. As methods for handling the CLI, schemes such as self-interference cancellation at a BS, power control in UL/DL, and adjustment of a modulation and coding scheme (MCS) may be used. Hereinafter, a BS causing the CLI is defined as the second BS, and a BS affected by the CLI is defined as the first BS.

When the first BS uses the above-described CLI handling schemes (for example, self-interference cancellation, power control in UL/DL, MCS adjustment, etc.) to reduce an impact of CLI, the first BS may need resource information regarding the locations of time resources and/or frequency resources in which FD operation is performed at the second BS. For example, the first BS may perform an operation for mitigation of CLI in time/frequency resources in which FD operation is performed, which are provided from the second BS. Alternatively, based on location information of time resources and/or frequency resources, the first BS may expect not to be affected by CLI while HD operation is performed at the second BS. In this case, based on the resource information provided by the second BS, the first BS may not perform a CLI handling scheme for slots/symbols in which HD operation rather than FD operation is performed, and may avoid performance degradation caused by performing operations for CLI handling.

Since the first BS is affected by CLI caused by the second BS during time intervals of slots/symbols in which FD operation is performed at the second BS, the first BS may perform the above-described CLI handling schemes in order to avoid an impact of CLI during the time intervals of slots/symbols in which FD operation is performed at the second BS. The first BS may identify location information of frequency resources in which FD operation is performed according to resource information, and may perform operations for avoiding or mitigating CLI generated at the first BS by the second BS through CLI handling schemes such as adjacent channel suppression, scheduling for CLI processing (and/or self-interference cancellation, power control in UL/DL, MCS adjustment). Accordingly, the first BS may need information on time resources and/or frequency resources in which FD operation is performed at the second BS.

According to the methods proposed below, location/resource information of time/frequency resources in which FD operation is performed may be provided from the second BS to the first BS. In this case, based on the resource information provided from the second BS, the first BS may perform a CLI handling scheme in order to minimize an impact of CLI generated by the second BS.

In relation to provision of the resource information as described above, an intended TDD DL-UL configuration NR information element (IE) through the F1/Xn interface is defined in information transmitted/provided between BSs. In the intended TDD DL-UL configuration NR, information such as subcarrier spacing, a cyclic prefix (CP), a DL-UL transmission periodicity, and a slot configuration list may be included (see TS 38.423 9.2.2.40 and TS 38.473 9.3.1.89). To simplify transmission of resource information for FD operation, time/frequency resource information for FD operation (hereinafter, FD resource information) may be added to an existing intended TDD DL-UL configuration NR IE. In this case, BSs may share FD resource information by exchanging the intended TDD DL-UL configuration NR IE with each other.

First, information on intended TDD DL-UL configuration NR defined previously may be defined as shown in Table 5 (see 3GPP TS 38.423 9.2.2.40 and TS 38.473 9.3.1.89).

**[Table 5]**

| **IE/Group name** | **Presence** | **Range** | **IE Type and Reference** | **Semantics Description** | **Criticality** | **Assigned Criticality** |
|---|---|---|---|---|---|---|
| NR SCS | M | | ENUMERATED (scs15, scs30, scs60, scs120, ..., scs480, scs960) | The values scs15, scs30, scs60 and scs120 corresponds to the sub carrier spacing in TS 38.104 [24]. | - | |
| NR Cyclic Prefix | M | | ENUMERATED (Normal, Extended, ...) | The type of cyclic prefix, which determines the number of symbols in a slot. | - | |
| NR DL-UL Transmission Periodicity | M | | ENUMERATED (ms0p5, ms0p625, ms1, ms1p25, ms2, ms2p5, ms3, ms4, ms5, ms10, ms20, ms40, ms60, ms80, ms100, ms120, ms140, ms160, ...) | The periodicity is expressed in the format msXpYZ, and equals X.YZ milliseconds. | - | |
| **Slot Configuration List** | | *1* | | | - | |
| **>Slot Configuration List Item** | | *1..<maxno ofslots>* | | | - | |
| >>Slot Index | | | INTEGER (0.. 5119) | | - | |
| >>CHOICE *Symbol Allocation in Slot* | M | | | | - | |
| >>>*All DL* | | | | | - | |
| >>>*All UL* | | | | | - | |
| >>>*Both DL and UL* | | | | | - | |
| >>>>Number of DL Symbols | M | | INTEGER (0..13) | Number of consecutive DL symbols in the slot identified by Slot Index. If extended cyclic prefix is used, the maximum value is 11. The *Permutation* IE indicates the location of DL symbols in the slot. | - | |
| >>>>Number of UL Symbols | M | | INTEGER (0..13) | Number of consecutive UL symbols in the slot identified by Slot Index. If extended cyclic prefix is used, the maximum value is 11. The *Permutation* IE indicates the location of UL symbols in the slot. | - | |
| >>>>Permutation | O | | ENUMERATED (DFU, UFD, ...) | If not present, the default value is DFU. | YES | ignore |

In intended TDD DL-UL configuration NR, a slot configuration list already exists. However, the slot configuration list is used only to deliver DL-UL configuration information based on TDD. In this case, the slot configuration list may be insufficient to include FD resource information due to a limited amount of information. Accordingly, a new item/field for providing FD resource information may need to be defined in intended TDD DL-UL configuration NR.

Specifically, methods for delivering FD resource information through intended TDD DL-UL configuration NR may include the following two methods.

A first method (hereinafter, the first method) may be a scheme of delivering FD resource information within a period (dl-UL-TransmissionPeriodicity in TDD-UL-DL-ConfigCommon). A second method (hereinafter, the second method) may be a scheme of delivering resource information in which FD does not operate through an item/field defined to operate in HD, such as a protected TDD slot (HD time resources defined such that only HD operation is performed for a purpose of not generating CLI). In the first method and the second method, a method of providing resource information related to FD operation/HD operation may provide only time resource information, only frequency resource information, or both time resource information and frequency resource information.

### 1. First method (provision of FD resource information in which FD operation is performed)

According to the first method, delivery of FD resource information has differences from HD operation and/or delivery of HD resource information as follows. For example, delivery of FD resource information needs to deliver information on each of time resources and frequency resources. In this case, the first BS may determine time/frequency resources in which CLI processing needs to be performed, based on FD resource information of the second BS. The first BS may need, as FD resource information for CLI processing, information on time resources, information on frequency resources, or information on both time resources and frequency resources. Hereinafter, methods of delivering information on time resources, information on frequency resources, or information on both time resources and frequency resources as FD resource information are separately described.

### (1) Method of delivering only time resource information operating in FD

FD resource information including only time resource information may be provided through an item/field such as a time-domain FD slot configuration list newly defined in intended TDD DL-UL configuration NR, distinguished from an existing slot configuration list (that is, an item/field within intended TDD DL-UL configuration NR). Time resource information operating in FD (hereinafter, FD time resource information) may include DL/UL/FD information on a slot-by-slot basis. Here, slots may be distinguished through slot indices, and the slot indices may correspond to or be identical to slot indices of an existing slot configuration list. In addition, a slot may be classified into four slot states/types. The four slot states/types may include an All DL type, an All UL type, an All FD type, and a combination type (DL/UL/FD, UL/FD, DL/FD). In the All DL type, the All UL type, and the All FD type, all symbols of a corresponding slot indicate symbols for DL, UL, or FD. In the combination type, a symbol configuration of symbols within a slot needs to be separately specified. For example, a symbol configuration of the combination type may include information on the number of DL symbols, the number of UL symbols, and the number of FD symbols included in the corresponding slot. In this case, a configuration order of each symbol within the slot may be defined through a permutation. However, hereinafter, for convenience of description, a specific basic permutation (DXFU (where X is an FD symbol)) is assumed.

As described above, an FD slot configuration list according to the proposed method may be defined as shown in Table 6 and Table 7 below.

**[Table 6]**

| **IE/Group Name** | Presenc e | Range | IE type and reference | Semantics description | Criti calit y | Assigne d Criticali ty |
|---|---|---|---|---|---|---|
| **Time-Domain FD Slot Configuration List** | | 0..1 | | | | |
| >**FD Slot Configuration Item** | | 1..<*max noofSlot s*> | | | | |
| >>Slot Index | M | | INTEGER (0..5119) | | - | |
| >>CHOICE *Symbol Allocation in Slot* | M | | | | - | |
| >>>*All DL* | | | NULL | This choice implies that all symbols in the slot are DL symbols. | - | |
| >>>*All UL* | | | NULL | This choice implies that all symbols in the slot are UL symbols. | - | |
| >>>*All FD* | | | NULL | This choice implies that all symbols in the slot are FD symbols. | - | |
| >>>*Both DL and*/*or UL* *and*/*or FD* | | | | | - | |
| >>>>Number of DL Symbols | M | | INTEGER (0..13) | Number of consecutive DL symbols in the slot identified by Slot Index IE. If extended cyclic prefix is used, the maximum value is 11. The *Permutation* IE indicates the location of DL symbols in the slot. | - | |
| >>>>Number of UL Symbols | M | | INTEGER (0..13) | Number of consecutive UL symbols in the slot identified by Slot Index IE. If extended cyclic prefix is used, the maximum value is 11. The *Permutation* IE indicates the location of UL symbols in the slot. | - | |
| >>>>Number of FD Symbols | M | | INTEGER (0..13) | Number of consecutive FD symbols in the slot identified by Slot Index IE. If extended cyclic prefix is used, the maximum value is 11. The *Permutation* IE indicates the location of FD symbols in the slot. | - | |
| >>>>Permutation | O | | ENUMER ATED (DFU, UFD, ...) | If not present, the default value is DXFU. | YES | ignore |

**[Table 7]**

| **Range bound** | **Explanation** |
|---|---|
| maxnoofslots | Maximum length of number of slots in a 10-ms period. Value is 5120. |

### (2) Method of delivering only frequency resource information operating in FD

FD resource information including only frequency resource information may be provided through an item/field such as a frequency-domain FD configuration list defined to be distinguished from an existing slot configuration list (that is, an item/field within intended TDD DL-UL configuration NR). For SBFD, FD frequency resource information operating in FD may indicate a UL sub-band within a period, and for SSFD, FD frequency resource information operating in FD may include frequency information of DL/UL spectrum sharing. A UL sub-band of SBFD and spectrum sharing frequency resources of SSFD may be represented by a start index and an end index of a set of RBs within a system bandwidth, or may be represented by a start index and a bandwidth.

For SBFD, an adjacent cell or the first BS may determine frequency resource information (or a frequency band) delivered through the frequency-domain FD configuration list as a UL sub-band related to SBFD, and may implicitly determine another frequency band within the same time resources as a DL sub-band of SBFD. For SSFD, an adjacent cell or the first BS may determine a frequency band delivered through the frequency-domain FD configuration list as an FD band, and may implicitly determine another frequency band within the same time resources as an HD band of SSFD.

As described above, the frequency-domain FD configuration list according to the proposed method may be defined as shown in Table 8 below.

**[Table 8]**

| **IE/Group Name** | Presen ce | Range | IE type and reference | Semantics description | Criticality | Assigned Criticality |
|---|---|---|---|---|---|---|
| **Frequency-Domain FD Configuration List** | | 0..1 | | | YES | reject |
| **>Frequency-Domain FD Configuration Item** | | 1..<*maxnoofR BsetsPerCell*> | | | EACH | reject |
| >>Start RB Set Index | M | | INTEGER (0.. maxnoofRBse tsPerCell-1, ...) | Refers to an RB set defined by RB Set Configuration (TS 38.473 9.3.1.230). | - | |
| | | | | The RB set indices are consecutive (and increasing) starting at 0. | | |
| >>Last RB Set Index | M | | INTEGER (0.. maxnoofRBse tsPerCell-1, ...) | Refers to an RB set defined by RB Set Configuration (TS 38.473 9.3.1.230). | - | |
| | | | | The RB set indices are consecutive (and increasing) starting at 0. | | |

In addition, for an RB set configuration (see 3GPP TS 38.473 9.3.1.230), FD items/fields may be defined as shown in Table 9.

**[Table 9]**

| **IE/Group Name** | **Presence** | **Ran ge** | **IE type and reference** | **Semantics description** |
|---|---|---|---|---|
| Subcarrier Spacing | M | | ENUMERATED (kHz15, kHz30, kHz60, kHz120, kHz240, spare3, spare2, spare1, ...) | Subcarrier spacing used as reference for the RB set configuration. |
| RB Set Size | M | | ENUMERATED (rb2, rb4, rb8, rb16, rb32, rb64) | Number of PRBs in each RB set. |
| | | | | If the RB sets of IAB-DU H/S/NA or FD resource configuration do not cover the entire carrier bandwidth, the remaining RBs not part of an RB set configuration are considered as included in the last RB set. |
| Number of RB Sets | M | | INTEGER(1.. *maxnoofRBsetsPerCell)* | Number of configured RB sets. The RB sets are contiguous and non-overlapping. |
| | | | | If *NR Carrier List* IE(9.3.1.137) is provided, the start RB index of the first RB set is the RB index of the lowest common RB with the SCS provided by *RB Set Configuration* IE, which overlaps with the lowest usable RB across all SCS-specific carriers provided by the *NR Carrier List* IE for the IAB-DU cell. Otherwise, the start |

| **IE/Group Name** | **Presence** | **Range** | **IE type and reference** | **Semantics description** |
|---|---|---|---|---|
| | | | | RB of the first RB set is aligned with point A for the IAB-DU or FD cell. |

### (3) Method of delivering both time resource information and frequency resource information operating in FD

A method of delivering both time resource information and frequency resource information operating in FD may be a method using both the above-described time resource information delivery method and the frequency resource information delivery method. For convenience of description, hereinafter, it is assumed that time resource information is delivered as a sub-level of frequency resource information. However, the present disclosure is not limited thereto, and frequency resource information may be delivered as a sub-level of time resource information, or time resource information and frequency resource information may be delivered independently of each other.

A method of delivering time resource information as a sub-level of frequency resource information may be defined as shown in Table 10.

**[Table 10]**

| **IE/Group Name** | Presence | Range | IE type and reference | Semantics description | Critic ality | Assigned Criticality |
|---|---|---|---|---|---|---|
| **FD Configuration List** | | 0..1 | | | YES | reject |
| **> FD Configuration Item** | | 1..<*max noofRBs etsPerC ell*> | | | EACH | reject |
| >>Start RB Set Index | M | | INTEGER (0.. maxnoofRBsetsPerCell-1, ...) | Refers to an RB set defined by RB Set Configuration (TS 38.473 9.3.1.230). | - | |
| | | | | The RB set indices are consecutive (and increasing) starting at 0. | | |
| >>Last RB Set Index | M | | INTEGER (0.. maxnoofRBsetsPerCell-1, ...) | Refers to an RB set defined by RB Set Configuration (TS 38.473 9.3.1.230). | - | |
| | | | | The RB set indices are consecutive (and increasing) starting at 0. | | |
| **>> Time-Domain FD Slot Configuration List** | | 1 | | | - | |
| **>>> FD Slot Configuration Item** | | 1..<*max noofHS NASlots* > | | | - | |
| >>>>Slot Index | M | | INTEGER (0..5119) | | - | |
| >>>>CHOICE *Symbol Allocation in Slot* | M | | | | - | |
| >>>>>*All DL* | | | NULL | This choice implies that all symbols in the slot are DL symbols. | - | |
| >>>>>*All UL* | | | NULL | This choice implies that all symbols in the slot are UL symbols. | - | |
| >>>>>*All FD* | | | NULL | This choice implies that all symbols in the slot are FD symbols. | - | |
| >>>>>*Both DL and*/*or UL and*/*or FD* | | | | | - | |
| >>>>>>Number of DL Symbols | M | | INTEGER (0..13) | Number of consecutive DL symbols in the slot identified by Slot Index IE. If extended cyclic prefix is used, the maximum value is 11. The *Permutation* IE indicates the location of DL symbols in the slot. | - | |
| >>>>>>Number of UL Symbols | M | | INTEGER (0..13) | Number of consecutive UL symbols in the slot identified by Slot Index IE. If extended cyclic prefix is used, the maximum value is 11. The *Permutation* IE indicates the location of UL symbols in the slot. | - | |
| >>>>>>Number of FD Symbols | M | | INTEGER (0..13) | Number of consecutive FD symbols in the slot identified by Slot Index IE. If extended cyclic prefix is used, the maximum value is 11. The *Permutation* IE indicates the location of FD symbols in the slot. | - | |
| >>>>>>Permutation | O | | ENUMERATED (DFU, UFD, ...) | If not present, the default value is DXFU. | YES | ignore |

Hereinafter, the second method, which is a scheme of providing information on time resources in which FD operation is not performed, is described in detail.

### 2. Second method - method of delivering resource information in which FD operation is not performed

The second method may be a method of delivering HD resource information regarding the locations of time/frequency resources in which FD operation is not performed in relation to CLI processing. For example, unlike other time intervals in which HD operation and FD operation may be changed, the second method provides HD resource information for time intervals in which only HD operation is fixedly performed. In this case, the first BS may clearly recognize that operations related to CLI processing are unnecessary for the time intervals corresponding to the HD resource information.

### (1) Method of delivering only time resource information in which FD operation is not performed

A scheme of providing time resource information as HD resource information may be similar to a basic scheme of providing time resource information as FD resource information (1-(1)). For example, the scheme of providing time resource information as HD resource information may differ from the scheme of providing time resource information (1-(1)) only in that information delivered from the second BS to the first BS is HD resource information rather than FD resource information. In this case, DL/UL resources defined as HD resource information may be protected HD resources in which an operation is not changed to FD operation by a dynamic indication at the second BS. The first BS may determine that application of a CLI handling scheme is not required for time resources/frequency resources indicated by the HD resource information.

HD resource information may indicate whether a corresponding slot is a slot for HD on a per-slot basis based on an index. A slot indicated as All HD may be a protected HD resource/HD slot that is not switched to FD. A symbol configuration of the combination type (DLHD/ULHD) may include information on the number of DL symbols and the number of UL symbols included in the corresponding slot. In this case, a configuration order of each symbol within the slot may be defined through a permutation. For example, DLHD symbols may be defined sequentially starting from front symbols of DL symbols, and ULHD symbols may be defined sequentially starting from rear symbols of defined UL symbols.

The above-described scheme of providing time resource information as HD resource information may be provided through items/fields as defined in Table 11 and Table 12 below.

**[Table 11]**

| **IE/Group Name** | Presence | Range | IE type and reference | Semantics description | Criticality | AssignedCriticality |
|---|---|---|---|---|---|---|
| **Time-Domain HD Slot Configuration List** | | 0..1 | | | | |
| >**FD Slot Configuration Item** | | 1..< *max noof Slots* > | | | | |
| >>Slot Index | M | | INTEGER (0..5119) | | - | |
| >>CHOICE *Symbol Allocation in Slot* | M | | | | - | |
| >>>*All DL* | | | NULL | This choice implies that all symbols in the slot are DL symbols. | - | |
| >>>*All UL* | | | NULL | This choice implies that all symbols in the slot are UL symbols. | - | |
| >>>*All HD* | | | NULL | This choice implies that all symbols in the slot are HD symbols. | - | |
| >>>*Both DL and*/*or UL* *and*/*or HD* | | | | | - | |
| >>>>Number of DL Symbols | M | | INTEGER (0..13) | Number of consecutive DL symbols in the slot identified by Slot Index IE. If extended cyclic prefix is used, the maximum value is 11. The *Permutation* IE indicates the location of DL symbols in the slot. | - | |
| >>>>Number of UL Symbols | M | | INTEGER (0..13) | Number of consecutive UL symbols in the slot identified by Slot Index IE. If extended cyclic prefix is used, the maximum value is 11. The *Permutation* IE indicates the location of UL symbols in the slot. | - | |
| >>>>Number of DLHD Symbols | M | | INTEGER (0..13) | Number of consecutive HD symbols in the slot identified by Slot Index IE. If extended cyclic prefix is used, the maximum value is 11. The *Permutation* IE indicates the location of HD symbols in the slot. | - | |
| >>>>Number of ULHD Symbols | M | | INTEGER (0..13) | Number of consecutive HD symbols in the slot identified by Slot Index IE. If extended cyclic prefix is used, the maximum value is 11. The *Permutation* IE indicates the location of HD symbols in the slot. | - | |
| >>>>Permutation | O | | ENUMERATED (DFU, UFD, ...) | If not present, the default value is DFU. | YES | ignore |

**[Table 12]**

| **Range bound** | **Explanation** |
|---|---|
| maxnoofslots | Maximum length of number of slots in a 10-ms period. Value is 5120. |

### (2) Delivery of frequency resource information operating in FD and time resource information not operating in FD

Combined resource information for delivering frequency resources operating in FD and time resources not operating in FD may include protected HD time resource information and FD frequency resource information in which FD operation is performed. As described above (Section 1-(3)), it is assumed that time resource information is delivered as a sub-level of frequency resource information (FD frequency resource information). However, the present disclosure is not limited thereto, and frequency resource information may be delivered as a sub-level of time resource information, or time resource information and frequency resource information may be delivered independently of each other.

Specifically, as sub-level information of frequency resource information (FD frequency resource information), information on protected HD time resources may be provided through items/fields as shown in Table 13.

**[Table 13]**

| **IE/Group Name** | Presence | Range | IE type and reference | Semantics description | Criticality | Assigned Criticality |
|---|---|---|---|---|---|---|
| **FD Configuration List** | | 0..1 | | | YES | reject |
| **> FD Configuration Item** | | 1..<*max noofRBs etsPerC ell*> | | | EACH | reject |
| >>Start RB Set Index | M | | INTEGER (0.. maxnoofRBsetsPe rCell-1, ...) | Refers to an RB set defined by RB Set Configuration (TS 38.473 9.3.1.230). | - | |
| | | | | The RB set indices are consecutive (and increasing) starting at 0. | | |
| >>Last RB Set Index | M | | INTEGER (0.. maxnoofRBsetsPe rCell-1, ...) | Refers to an RB set defined by RB Set Configuration (TS 38.473 9.3.1.230). | - | |
| | | | | The RB set indices are consecutive (and increasing) starting at 0. | | |
| **>> Time-Domain HD Slot Configuration List** | | 1 | | | - | |
| **>>> HD Slot Configuration Item** | | 1..<*max noofHS NASlots* > | | | - | |
| >>>>Slot Index | M | | INTEGER (0..5119) | | - | |
| >>>>CHOICE *Symbol Allocation in Slot* | M | | | | - | |
| >>>>>*All DL* | | | NULL | This choice implies that all symbols in the slot are DL symbols. | - | |
| >>>>>*All UL* | | | NULL | This choice implies that all symbols in the slot are UL symbols. | - | |
| >>>>>*All HD* | | | NULL | This choice implies that all symbols in the slot are HD symbols. | - | |
| >>>>>*Both DL* *and*/*or UL and*/*or* *HD* | | | | | - | |
| >>>>>>Number of DL Symbols | M | | INTEGER (0..13) | Number of consecutive DL symbols in the slot identified by Slot Index IE. If extended cyclic prefix is used, the maximum value is 11. The *Permutation* IE indicates the location of DL symbols in the slot. | - | |
| >>>>>>Number of UL Symbols | M | | INTEGER (0..13) | Number of consecutive UL symbols in the slot identified by Slot Index IE. If extended cyclic prefix is used, the maximum value is 11. The *Permutation* IE indicates the location of UL symbols in the slot. | - | |
| >>>>>>Number of DLHD Symbols | M | | INTEGER (0..13) | Number of consecutive HD symbols in the slot identified by Slot Index IE. If extended cyclic prefix is used, the maximum value is 11. The *Permutation* IE indicates the location of HD symbols in the slot. | - | |
| >>>>>>Number of ULHD Symbols | M | | INTEGER (0..13) | Number of consecutive HD symbols in the slot identified by Slot Index IE. If extended cyclic prefix is used, the maximum value is 11. The *Permutation* IE indicates the location of HD symbols in the slot. | - | |
| >>>>>>Permutatio n | O | | ENUMERATED (DFU, UFD, ...) | If not present, the default value is DFU. | YES | ignore |

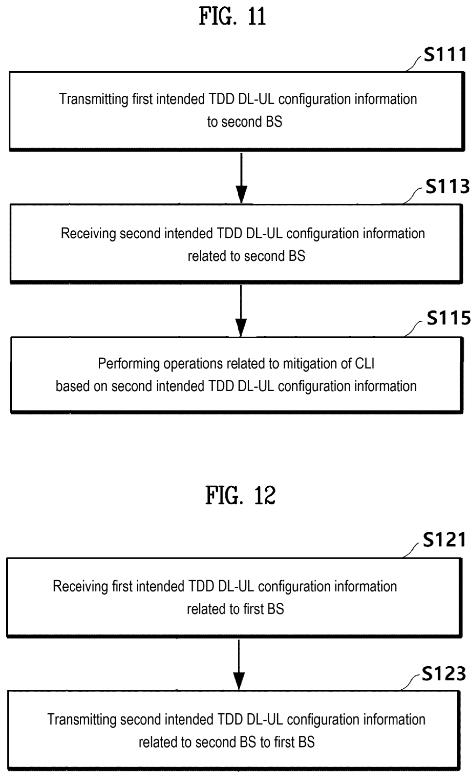

FIG. 11 is a diagram for explaining a method in which a first BS performs operations related to mitigation of CLI based on intended TDD DL-UL configuration information received from a second BS.

As described in the section titled "Inter-Cell FD Time/Frequency Configuration Information Exchange," the first BS may exchange the intended TDD DL-UL configuration information with the second BS. For example, the first BS may receive the intended TDD DL-UL configuration information including information defined in at least one of Table 5 to Table 13 from the second BS. For example, when the second BS performs an operation based on SBFD or SFFD, the intended TDD DL-UL configuration information may further include information on time resources/frequency resources in which SBFD or SFFD is performed as described above.

Specifically, referring to FIG. 11, the first BS may transmit first intended TDD DL-UL configuration information to the second BS (S111). Here, the first intended TDD DL-UL configuration information may be transmitted through an Xn interface or an F1 interface, which is an interface between BSs.

Next, the first BS may receive second intended TDD DL-UL configuration information related to the second BS from the second BS (S113). Here, the second intended TDD DL-UL configuration information may also be transmitted through an Xn interface or an F1 interface, which is an interface between BSs. When the second BS is scheduled to perform SBFD or SFFD operation, the second intended TDD DL-UL configuration information may further include time resource information and/or frequency resource information in which SBFD or SFFD operation is performed as described above. Hereinafter, for convenience of description, SBFD or SFFD operation is defined as FD operation.

Specifically, when the second BS performs FD operation, as described above, the second intended TDD DL-UL configuration information may further include FD time resource information and/or FD frequency resource information related to FD operation, defined based on at least one of Table 6 to Table 13. For example, the second intended TDD DL-UL configuration information may include an existing slot configuration list defined in Table 5, and may further include an FD slot configuration list defined in Table 6 and Table 7. Alternatively, the second intended TDD DL-UL configuration information may include the existing slot configuration list defined in Table 5, and may further include a frequency-domain FD configuration list and information on an RB set configuration defined in Table 8 and Table 9. Alternatively, the second intended TDD DL-UL configuration information may include the existing slot configuration list defined in Table 5, and may further include FD resource information in which FD time resource information is configured as sub-level information in a frequency-domain FD configuration list, as shown in Table 10. Alternatively, the second intended TDD DL-UL configuration information may include the existing slot configuration list defined in Table 5, and may further include HD time resource information and/or HD frequency resource information in which only HD operation is performed, as shown in Table 11 to Table 13.

For example, the second intended TDD DL-UL configuration information may include FD slot configuration information for slots in which FD operation is performed. Here, the FD slot configuration information may include information indicating whether all symbols included in a corresponding slot are configured as UL symbols, DL symbols, or FD symbols for each slot index. For example, the FD slot configuration information may indicate whether a slot corresponding to the slot index belongs to one of the above-described types: All DL type, All UL type, All FD type, or combination type (DL/UL/FD, UL/FD, DL/FD). When the FD slot configuration information indicates the index of a specific slot as a combination-type slot, the FD slot configuration information may further include symbol information on a symbol configuration for the specific slot, including the number of DL symbols and the number of FD symbols, or the number of UL symbols and the number of FD symbols.

Alternatively, the second intended TDD DL-UL configuration information may further include frequency resource information related to a start frequency and a bandwidth for specifying a frequency band in which FD operation is performed. For example, the second intended TDD DL-UL configuration information may include information on a start frequency and a bandwidth for a DL sub-band and/or a UL sub-band in which FD operation is performed. For example, the second intended TDD DL-UL configuration information may include information indicating a start RB index and an end RB index of at least one sub-band among a DL sub-band and a UL sub-band in which FD operation is performed, or may include information indicating a start RB index and a bandwidth of at least one sub-band among the DL sub-band and the UL sub-band in which FD operation is performed. In addition, the second intended TDD DL-UL configuration information may further include configuration information for an RB set defined in Table 9.

In this case, the first BS may perform operations related to mitigation of CLI based on the second intended TDD DL-UL configuration information (S115). For example, time intervals/frequency intervals in which CLI may occur due to FD operation of the second BS may be identified, and operations for mitigation of CLI for the identified time intervals/frequency intervals may be performed. For example, the first BS may perform operations related to a CLI handling scheme such as adjacent channel suppression or scheduling based on time intervals/frequency bands in which FD operation of the second BS is performed.

Alternatively, the second intended TDD DL-UL configuration information may include information on protected HD slots in which only HD operation is performed, instead of time resource information/frequency resource information in which FD operation is performed. Alternatively, the second intended TDD DL-UL configuration information may include both time resource information/frequency resource information in which FD operation is performed and information on the protected HD slots. In this case, the first BS may clearly identify, based on the second intended TDD DL-UL configuration information, time intervals in which the operations related to mitigation of CLI are unnecessary (that is, time intervals in which the second BS performs only HD operation).

FIG. 12 is a diagram for explaining a method in which a second BS exchanges intended TDD DL-UL configuration information with a first BS.

Referring to FIG. 12, the second BS may receive first intended TDD DL-UL configuration information related to the first BS (S121). The first intended TDD DL-UL configuration information may include a slot configuration list related to TDD defined in Table 5, as described above. Alternatively, when the first BS performs FD operation, the first intended TDD DL-UL configuration information may further include time resource information and/or frequency resource information in which FD operation is performed.

Next, the second BS may transmit second intended TDD DL-UL configuration information related to the second BS to the first BS (S123). As described above, based on the second BS supporting FD (or SBFD) operation, the second intended TDD DL-UL configuration information may further include FD slot configuration information for slots in which FD operation is performed. For example, when the second BS is scheduled to perform FD operation, CLI may occur at the first BS due to the FD operation. Accordingly, by providing the FD slot configuration information for slots in which FD operation is performed to the first BS through the second intended TDD DL-UL configuration information, the second BS may guide the first BS to appropriately perform operations for mitigation of CLI.

For example, the second intended TDD DL-UL configuration information may include an existing slot configuration list defined in Table 5, and may further include an FD slot configuration list defined in Table 6 and Table 7. Alternatively, the second intended TDD DL-UL configuration information may include the existing slot configuration list defined in Table 5, and may further include a frequency-domain FD configuration list and information on an RB set configuration defined in Table 8 and Table 9. Alternatively, the second intended TDD DL-UL configuration information may include the existing slot configuration list defined in Table 5, and may further include FD resource information in which FD time resource information is configured as sub-level information in a frequency-domain FD configuration list, as shown in Table 10. Alternatively, the second intended TDD DL-UL configuration information may include the existing slot configuration list defined in Table 5, and may further include HD time resource information and/or HD frequency resource information in which only HD operation is performed, as shown in Table 11 to Table 13.

Specifically, the second intended TDD DL-UL configuration information may include FD slot configuration information for slots in which FD operation is performed. Here, the FD slot configuration information may include information indicating whether all symbols included in a corresponding slot are configured as UL symbols, DL symbols, or FD symbols for each slot index. For example, the FD slot configuration information may indicate whether a slot corresponding to the slot index belongs to one of the above-described types: All DL type, All UL type, All FD type, or combination type (DL/UL/FD, UL/FD, DL/FD). When the FD slot configuration information indicates the index of a specific slot as a combination-type slot, the FD slot configuration information may further include information on a symbol configuration for the specific slot, including the number of DL symbols and the number of FD symbols, or the number of UL symbols and the number of FD symbols.

Alternatively, the second intended TDD DL-UL configuration information may further include frequency resource information related to a start frequency and a bandwidth for specifying a frequency band in which FD operation is performed. For example, the second intended TDD DL-UL configuration information may include information on a start frequency and a bandwidth for a DL sub-band and/or a UL sub-band in which FD operation is performed. For example, the second intended TDD DL-UL configuration information may include information indicating a start RB index and an end RB index of at least one sub-band among a DL sub-band and a UL sub-band in which FD operation is performed, or may include information indicating a start RB index and a bandwidth of at least one sub-band among the DL sub-band and the UL sub-band in which FD operation is performed. In addition, the second intended TDD DL-UL configuration information may further include configuration information for an RB set defined in Table 9.

As described above, the present disclosure may effectively indicate time/frequency resources in which CLI may occur due to FD operation between BSs by pre-exchanging resource information related to FD operation between the BSs based on intended TDD DL-UL configuration information. Alternatively, the present disclosure may effectively perform operations for mitigation of CLI that may occur due to FD operation. Alternatively, the present disclosure may additionally provide resource information related to FD operation by using intended TDD DL-UL configuration information, which is an existing IE, without defining a new IE.

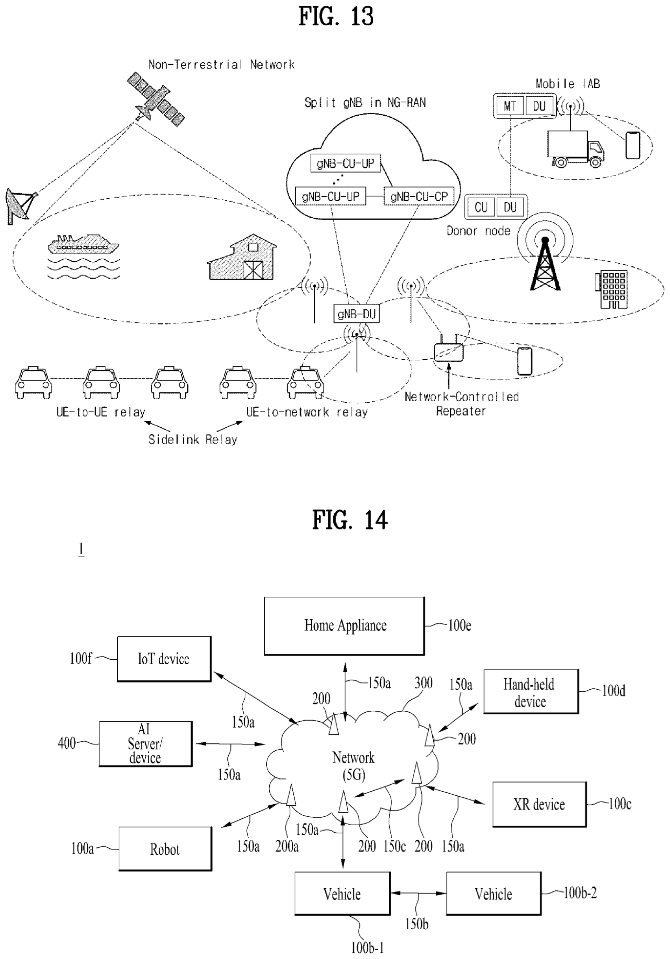

FIG. 13 illustrates an exemplary flexible network topology to which some examples of the present disclosure are applicable.

FIG. 13 illustrates an exemplary flexible network topology to which some examples of the present disclosure are applicable.

To compensate for incomplete areas of network coverage, a network topology for configuring a split radio access network (RAN) more flexibly and resiliently may be considered. For this purpose, various nodes such as an integrated access and backhaul (IAB) node, a relay, and a radio frequency (RF) repeater as illustrated in the example of FIG. 13 may be applied, and a non-terrestrial network (NTN) may also be integrated. For example, an IAB node may correspond to a node providing a wireless backhaul. For example, a relay may refer to an arbitrary intermediate point, and for a sidelink relay in which the UE functions as a relay, the relay may collectively refer to a UE-to-network (U2N) relay and a UE-to-UE (U2U) relay. For example, an RF repeater may correspond to a node that performs a function of simple signal amplification and forwarding, and for a network-controlled repeater, transmission and reception configurations may be adjusted based on information provided from a network as well as signal amplification and forwarding. For example, an NTN node may correspond to a satellite or an aerial vehicle that provides NTN coverage that is difficult for a terrestrial network to provide. In addition to these examples, various intermediate points may be introduced to improve a network topology.

Referring to FIG. 13, a split RAN may support division of a BS into one centralized unit (CU) and one or more distributed units (DUs). The CU and the DU may correspond to logical units. The CU may be further divided into a control plane (CP) portion and one or more user plane (UP) portions. Since a failure at the CU-CP affects the CU-UP as well as the DU, various intermediate points may be introduced to compensate for such a failure.

The intermediate point may correspond to a UE or a BS depending on a relative relationship with another node. For example, the IAB node may include an MT (mobile termination) portion and a DU. The MT may connect the IAB node to a donor node. The DU of the IAB node may serve another UE or may connect to another IAB node to provide a multi-hop wireless backhaul to the UE. That is, the IAB node may correspond to the BS in a relative relationship with a user-side node, and may correspond to the UE in a relative relationship with a network-side node.

In some examples of the present disclosure, the description of the UE may be equally applied not only to a user-side endpoint but also to an intermediate point corresponding to the UE in a relative relationship with a network-side endpoint. Similarly, in some examples of the present disclosure, the description of the BS may be equally applied not only to a network-side endpoint but also to an intermediate point corresponding to the BS in a relative relationship with a user-side endpoint. However, in most cases in which no additional description is provided for operations involving three or more entities, communication entities in the present disclosure are briefly described using the terms of the UE and/or the BS (or a first node and/or a second node). Herein, the terms UE and/or BS (or first node and/or second node) are interpreted as including or substituting for an arbitrary endpoint or an arbitrary intermediate point according to relationships with other nodes.

That is, in some examples of the present disclosure, for convenience of description, an entity performing an operation may be referred to as the BS and/or UE (or first node and/or second node). In addition, the terms BS and/or UE (or first node and/or second node) may be interpreted/replaced as in the following examples. For example, the BS (or first node) and the UE (or second node) may respectively correspond to a first endpoint and a second endpoint; an endpoint and an intermediate point; an intermediate point and an endpoint; or a first intermediate point and a second intermediate point.

In the present disclosure, there may be no intermediate point or one or more intermediate points between the BS and the UE. When an intermediate point exists, the intermediate point may correspond to an IAB node, a relay, an RF repeater, an NTN node, or a node supporting another function. The intermediate point may be a node with a fixed location, or may be a node with a non-fixed location.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 14 illustrates a communication system applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

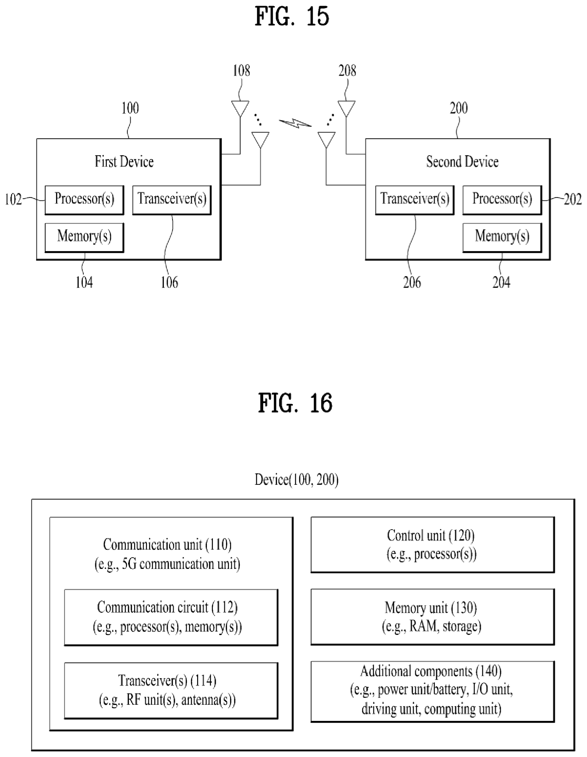

FIG. 15 illustrates a wireless device applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or a first BS may include the processor(s) 102 connected to the RF transceiver(s) and the memory(s) 104. The memory(s) 104 may include at least one program capable of performing operations related to the embodiments described above with reference to FIGS. 9 to 12.

Specifically, the processor(s) 102 may control the RF transceiver(s) 106 to transmit first intended TDD DL-UL configuration information related to the first BS to a second BS and receive second intended TDD DL-UL configuration information related to the second BS from the second BS. Here, the second intended TDD DL-UL configuration information may include FD slot configuration information for slots in which SBFD operation or SSFD operation is performed.

Alternatively, a processing device including the processor(s) 102 and the memory(s) 104 may be configured. The processing device may include at least one processor and at least one memory connected to the at least one processor and storing instructions that, when executed by the at least one processor, cause the first BS to transmit first intended TDD DL-UL configuration information related to the first BS to a second BS and receive second intended TDD DL-UL configuration information related to the second BS from the second BS. Here, the second intended TDD DL-UL configuration information may include FD slot configuration information for slots in which SBFD operation or SSFD operation is performed.

Alternatively, a non-transitory computer-readable storage medium having recorded thereon instructions for performing the proposed methods described with reference to FIG. 9 to FIG. 12 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to one example, the second wireless device 200 or a second BS may include the processor(s) 202 connected to the RF transceiver(s) and the memory(s) 204. The memory(s) 204 may include at least one program capable of performing operations related to the embodiments described above with reference to FIGS. 9 to 12.

Specifically, the processor(s) 202 may control the transceiver(s) 206 or RF transceiver(s) to receive first TDD DL-UL configuration information related to a first BS and transmit second intended TDD DL-UL configuration information related to the second BS to the first BS. Here, based on the second BS supporting SBFD operation or SSFD operation, the second intended TDD DL-UL configuration information may further include FD slot configuration information for slots in which operation of the SBFD operation or the SSFD operation is performed.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

FIG. 16 illustrates another example of a wireless device applied to the present disclosure.

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The embodiments of the present disclosure as described above may be applied to various mobile communication systems.

## Claims

1. A method comprising:
transmitting first intended time division duplexing (TDD) downlink-uplink (DL-UL) configuration information related to a first base station (BS) to a second BS; and
receiving second intended TDD DL-UL configuration information related to the second BS from the second BS,
wherein the second intended TDD DL-UL configuration information includes full duplex (FD) slot configuration information for slots in which sub-band full duplex (SBFD) operation or spectrum sharing full duplex (SSFD) operation is performed.

2. The method of claim 1, wherein the FD slot configuration information includes information indicating whether all symbols included in a corresponding slot are configured as UL symbols, DL symbols, or FD symbols, for each slot index.

3. The method of claim 2, wherein the FD slot configuration information further includes information on a specific slot for which a symbol configuration for a number of DL symbols and a number of FD symbols, or a number of UL symbols and the number of FD symbols is defined.

4. The method of claim 1, wherein the first BS performs operations related to mitigation of cross link interference (CLI) based on the FD slot configuration information.

5. The method of claim 1, wherein the second intended TDD DL-UL configuration information further includes frequency resource information related to a start frequency and a bandwidth for specifying a frequency band in which FD is performed.

6. The method of claim 5, wherein the frequency resource information further includes configuration information for a resource block set related to the frequency band.

7. The method of claim 1, wherein the second intended TDD DL-UL configuration information further includes configuration information for protected half duplex (HD) slots in which only HD operation is performed.

8. The method of claim 7, wherein the first BS identifies time intervals for which performance of operations related to mitigation of cross link interference (CLI) is unnecessary, based on the configuration information for the protected HD slots.

9. The method of claim 1, wherein slots in which the SBFD operation is performed are time intervals in which transmission of a DL signal in a first sub-band and reception of a UL signal in a second sub-band are simultaneously performed.

10. The method of claim 1, wherein the first intended TDD DL-UL configuration information and the second intended TDD DL-UL configuration information are received through an Xn interface or an F1 interface.

11. A non-transitory computer-readable storage medium having recorded thereon instructions for executing the method of claim 1.

12. A first base station (BS) comprising:
a radio frequency (RF) transceiver; and
a processor connected to the RF transceiver,
wherein the processor is configured to control the RF transceiver to:
transmit first intended time division duplexing (TDD) downlink-uplink (DL-UL) configuration information related to the first BS to a second BS; and
receive second intended TDD DL-UL configuration information related to the second BS from the second BS,
wherein the second intended TDD DL-UL configuration information includes full duplex (FD) slot configuration information for slots in which sub-band full duplex (SBFD) operation or spectrum sharing full duplex (SSFD) operation is performed.

13. A processing device configured to control a first base station (BS), the processing device comprising:
at least one processor; and
at least one memory connected to the at least one processor and storing instructions that, when executed by the at least one processor, cause the first BS to:
transmit first intended time division duplexing (TDD) downlink-uplink (DL-UL) configuration information related to the first BS to a second BS; and
receive second intended TDD DL-UL configuration information related to the second BS from the second BS,
wherein the second intended TDD DL-UL configuration information includes full duplex (FD) slot configuration information for slots in which sub-band full duplex (SBFD) operation or spectrum sharing full duplex (SSFD) operation is performed.

14. A method comprising:
receiving first intended time division duplexing (TDD) downlink-uplink (DL-UL) configuration information related to a first base station (BS); and
transmitting second intended TDD DL-UL configuration information related to a second BS to the first BS,
wherein, based on the second BS supporting sub-band full duplex (SBFD) operation or spectrum sharing full duplex (SSFD) operation, the second intended TDD DL-UL configuration information includes full duplex (FD) slot configuration information for slots in which the SBFD operation or the SSFD operation is performed.

15. A second base station (BS) comprising:
a radio frequency (RF) transceiver; and
a processor connected to the RF transceiver,
wherein the processor is configured to control the RF transceiver to:
receive first intended time division duplexing (TDD) downlink-uplink (DL-UL) configuration information related to a first BS; and
transmit second intended TDD DL-UL configuration information related to a second BS to the first BS,
wherein, based on the second BS supporting sub-band full duplex (SBFD) operation or spectrum sharing full duplex (SSFD) operation, the second intended TDD DL-UL configuration information includes full duplex (FD) slot configuration information for slots in which the SBFD operation or the SSFD operation is performed.
